# EUROPÄISCHE PATENTANMELDUNG

(11) **EP 4 129 779 A1**
(43) Veröffentlichungstag der Anmeldung: **08.02.2023**
(21) Anmeldenummer: 21189672.5
(22) Anmeldetag: 04.08.2021
(51) Int. Cl.: B60T 8/88, B60T 17/22

(54) **VERFAHREN ZUR ZUSTANDSÜBERWACHUNG EINES ELEKTROMECHANISCHEN BAUTEILS UND VORRICHTUNG**

(71) Anmelder: Siemens Aktiengesellschaft, 80333 München (DE)
(72) Erfinder: Vavrous, Jan, 44001 Louny (CZ); Kovác, Jakub, 19016 Prague (CZ); Tomasy, Adrian, 25210 Mnisek pod Brdy (CZ)

(57) **Zusammenfassung**

Die Erfindung betrifft ein Verfahren zur Zustandsüberwachung eines elektromechanischen Bauteils (1) umfassend eine Spule (L) und einen Anker (A), wobei ein Arbeitsstrom (I_{L}) an die Spule (L) angeschaltet oder abgeschaltet wird, wobei durch das an- bzw. abschalten des Arbeitsstroms (I_{L}) mittels der Spule (L) und dem Anker (A) ein mechanischer Vorgang ausgelöst wird, wobei mittels eines Detektionsmittels (PD) der durch die Spule (L) fließende Arbeitsstrom (IL) überwacht wird, wobei der mechanische Vorgang ausgehend von einem Anfangszustand (AZ) bis hin zu einem Endzustand (EZ) eines Stellmittels (SM) bzw. ausgehend von dem Endzustand (EZ) zu dem Anfangszustand (AZ) des Stellmittels (SM) eine Induktivität (H) der Spule (L) verändert, wobei die Veränderung der Induktivität (H) eine Änderung (12) im Stromverlauf (10) des aktuell überwachten Arbeitsstroms (I_{L}) hervorruft, wobei mittels des Detektionsmittels (PD) diese Änderung (12) auf eine Plausibilität geprüft wird, und das Ergebnis für eine Fehlerdiagnose und oder eine vorausschauende Wartungsempfehlung des Bauteils (1) genutzt wird.

## Beschreibung

Die Erfindung betrifft ein Verfahren zur Zustandsüberwachung eines elektromechanischen Bauteils umfassend eine Spule und einen Anker, wobei ein Arbeitsstrom an die Spule angeschaltet oder abgeschaltet wird, wobei durch das an- bzw. abschalten des Arbeitsstroms mittels der Spule und dem Anker ein mechanischer Vorgang ausgelöst wird.

Ein derartiges Verfahren wird beispielsweise bei einer digitalen Ausgabebaugruppe von beispielsweise einer speicherprogrammierbaren Steuerung zur Ansteuerung von elektromagnetischen Lasten wie z.B. Relais ausgeführt.

In der EP 2 549 843 A1 ist eine derartige Ausgabebaugruppe offenbart. Bei diesen Baugruppen ist beispielsweise bekannt, dass ein Ausgangssignal auf einen eingestellten statischen Wert bezüglich Kurzschluss, Überlast und/oder Drahtbruch überwacht werden kann. Bei einem Überschreiten eines Grenzwertes sendet die Baugruppe ein Diagnosesignal an ein übergeordnetes System.

Von Nachteil ist es, dass eine z.B. durch Verschleiß oder Verschmutzung des Bauteils bedingte Änderung des Signalverlaufes beim Schalten eines elektromechanischen Schalters nicht erkannt wird. Ein möglicher Wartungshinweis kann somit nicht generiert werden, was wiederum zu Ausfällen der Anlage führt und somit hohe Kosten verursachen kann.

Es ist demnach die Aufgabe der vorliegenden Erfindung die bereits bekannten Diagnoseverfahren dahingehend zu erweitern, dass zum einen ein frühzeitiger Verschleiß von elektromagnetischen Bauteilen erkannt wird oder zum anderen auch ein Sicherheitsproblem aufgedeckt werden kann.

Die Aufgabe wird dadurch gelöst, dass bei der eingangs genannten Zustandsüberwachung mittels eines Detektionsmittels der durch die Spule fließende Arbeitsstrom überwacht wird, wobei der mechanische Vorgang ausgehend von einem Anfangszustand bis hin zu einem Endzustand eines Stellmittels bzw. ausgehend von dem Endzustand zu dem Anfangszustand des Stellmittels eine Induktivität der Spule verändert, wobei die Veränderung der Induktivität eine Änderung im Stromverlauf des aktuell überwachten Arbeitsstroms hervorruft, wobei mittels des Detektionsmittels diese Änderung auf eine Plausibilität geprüft wird, und das Ergebnis für eine Fehlerdiagnose und/oder eine vorausschauende Wartungsempfehlung des Bauteils genutzt wird. Auf vorteilhafte Art und Weise wird durch eine Auswertung von dem Bauteil bzw. der Spule innewohnenden Eigenschaften ohne zusätzlichem Sensor auf einen Zustand des Bauteils geschlossen. Beispielsweise bei einem Relais wird der Anker angezogen und über Stellmittel werden mechanische Kontakte geöffnet oder geschlossen. Sollte aufgrund von Verschmutzungen oder Verschleiß des Stellmittels der Anker nicht mehr mit der gewohnten Kraft angezogen werden, sondern es wäre eine erhöhte Stromaufnahme für das Anziehen des Ankers notwendig, so wird sich diese Veränderung der Verschmutzung in dem Stromverlauf bemerkbar machen, welches als Änderung detektierbar ist und somit kann auf einen Fehler geschlossen werden.

Von weiterem Vorteil ist es, wenn der aktuell überwachte Arbeitsstrom derart analysiert wird, dass sein Stromverlauf mit einer das Bauteil charakterisierenden Einschaltkennlinie bzw. Ausschaltkennlinie verglichen wird, und wenn der Vergleich eine vorgebbare Abweichung überscheitet, wird eine Wartungsmeldung abgesetzt. Die zum Vergleich heranzuziehende Einschaltkennlinie bzw. Ausschaltkennlinie ist vorzugsweise aufgenommen worden für ein noch nicht abgenutztes Bauteil bzw. fabrikneues Bauteil. Anhand dieser Einschaltkennlinie und der Ausschaltkennlinie hat man demnach immer einen Referenzwert für ein neuwertiges funktionierendes Bauteil. Sollte der ermittelte Stromverlauf von diesen Ausschaltkennlinien bzw.

Einschaltkennlinien abweichen, so kann auf eine Alterung oder auf einen Verschleiß geschlossen werden.

Auch wäre es denkbar, ein zeitliches Auftreten der Änderung im Stromverlauf in einer Inbetriebnahme-Phase als Referenzzeitpunkt abzuspeichern, und zukünftige Zeitpunkte des Auftretens der Änderung im Stromverlauf mit dem Referenzzeitpunkt zu vergleichen, und sollte dabei die Differenz zwischen dem Referenzzeitpunkt und dem zukünftigen Zeitpunkt ein vorgebbares Maß überschreiten, so wird eine Wartungsmeldung abgesetzt.

Grundsätzlich ist zu sagen, dass wenn sich bei einem elektromagnetischen Bauteil ein Stellmittel von einem Anfangszustand zu einem Endzustand verschiebt, wird sich ein magnetischer Widerstand in dem elektromagnetischen Bauteil z.B. durch Schließen eines Luftspaltes, verringern. Durch diese Verringerung erhöht sich die Induktivität, und in der Spule wird eine Spannung induziert, die die gleiche Polarität wie eine Speisespannung hat. Der Strom verringert sich während des aufeinander Zubewegens, beispielsweise der Eisenteile des Relais. Diese Stromverringerung wird dann als Änderung beobachtet und man kann für den Anfang der Stromverringerung einen Referenzzeitpunkt festlegen. Sollte nun das elektromechanische Bauteil aufgrund von Alterungserscheinungen Auswirkungen auf seinen magnetischen Widerstand erfahren haben, so wird sich dieser Zeitpunkt der Stromveränderung verschieben und gerade diese Verschiebung ist wieder auswertbar und kann für eine vorausschauende Wartungsanalyse genutzt werden.

Im Hinblick auf eine verbesserte Diagnose und ein Predictive Maintenance innerhalb eines industriellen Prozesses kann das Detektionsmittel innerhalb einer Ausgabebaugruppe für elektromechanische Aktoren betrieben werden.

Speziell bei Relais-Ausgabegruppen mit eigenen Relais, welche wiederum Digitalausgänge betreiben, kann das Detektionsmittel innerhalb einer Relais-Ausgabebaugruppe für die Relais innerhalb der Relais-Ausgabebaugruppe betrieben werden.

Im Hinblick auf Stellventile, welche beispielsweise in der Verfahrenstechnik, insbesondere der Petro-Chemie eingesetzt werden, ist es von Vorteil, wenn als elektromechanisches Bauteil ein Stellventil eingesetzt wird und anhand der Überwachung auf einen Ventilzustand und/oder oder auf eine Ventilschieberposition geschlossen wird.

Auch für den Einsatz mit sicherheitsgerichteten Steuerungen in einem Sicherheitssystem kann das Detektionsmittel verwendet werden, ein erstes Bauteil umfassend eine erste Spule und einen ersten Anker und ein zweites Bauteil umfassend eine zweite Spule und einen zweiten Anker, welche für eine Sicherheitsschaltung betrieben werden, zu überwachen, dazu wird weiterhin in dem Detektionsmittel zusätzlich zu dem durch die erste Spule fließenden Arbeitsstrom auch der durch die zweite Spule fließende Arbeitsstrom überwacht. Die beiden zu überwachenden elektromechanischen Bauteile können beispielsweise zwei voneinander unabhängig schaltbare Relais sein, welche wiederum je einen Schalter schalten, wobei die Schalter in einer Sicherheitsschaltung in einer Reihenschaltung angeordnet sind.

Es kann eine bewertete Überprüfung der Sicherheitsfunktion der hintereinander geschalteten Schalter durchgeführt werden.

Gemäß einem weiteren Aspekt der Erfindung betrifft die eingangs genannte Aufgabe ebenfalls eine Vorrichtung. Damit wird die eingangs genannte Aufgabe auch gelöst durch eine Vorrichtung, ausgestaltet zur Zustandsüberwachung eines elektromechanischen Bauteils mit einer Spule und einem Anker, wobei wenn an die Spule ein Arbeitsstrom angeschaltet oder abgeschaltet, mittels der Spule und dem Anker ein mechanischer Vorgang ausgelöst wird, aufweisend ein Detektionsmittel, welches ausgestaltet ist, den durch die Spule fließenden Arbeitsstrom zu überwachen, weiterhin ausgestaltet eine Änderung im Stromverlauf aufgrund einer Veränderung einer Induktivität zu Detektieren, wobei die Veränderung der Induktivität durch den mechanischen Vorgang, ausgehend von einem Anfangszustand bis zu hin zu einem Endzustand eines Stellmittels bzw. ausgehend von dem Endzustand zu dem Anfangszustand des Stellmittels hervorgerufen wird, dass Detektionsmittel ist dazu ausgestaltet diese Änderung auf eine Plausibilität zu prüfen, und das Ergebnis als eine Fehlerdiagnose und/oder eine vorausschauende Wartungsempfehlung bereitzustellen.

Weiterhin ist bei der Vorrichtung ein Speichermittel vorhanden, in dem eine das Bauteil charakterisierende Einschaltkennlinie bzw. Ausschaltkennlinie hinterlegt ist, wobei das Detektionsmittel weiterhin dazu ausgestaltet ist, den aktuellen überwachten Stromverlauf des Arbeitsstroms mit der charakterisierenden Einschaltkennlinie bzw. Ausschaltkennlinie zu vergleichen, und wenn der Vergleich eine vorgebbare Abweichung überschreitet eine Wartungsmeldung abzusetzen.

In einer weiteren Ausgestaltung ist das Detektionsmittel ausgestaltet ein zeitliches Auftreten der Änderung im Stromverlauf in eine Inbetriebnahmephase als Referenzzeitpunkt abzuspeichern und zukünftige Zeitpunkte des Auftretens der Änderung im Stromverlauf mit dem Referenzzeitpunkt zu vergleichen, und eine Differenz zwischen dem Referenzzeitpunkt und dem zukünftigen Zeitpunkt zu ermitteln und mit einem vorgebbaren Maß zu vergleichen und bei einem Überschreiten eine Wartungsmeldung abzusetzen.

Die Vorrichtung ist insbesondere ausgestaltet als eine Ausgabebaugruppe für elektromechanische Aktoren.

Weiterhin können insbesondere Relais-Ausgabebaugruppen als Vorrichtung ausgestaltet sein, wobei das Detektionsmittel die Relais innerhalb der Relais-Ausgabebaugruppe überwacht.

Auch kann eine Vorrichtung ausgestaltet sein, elektromechanische Bauteile, welche als Stellventil ausgestaltet sind, anzusteuern und weiterhin ist die Vorrichtung ausgestaltet anhand der Überwachung des Stromverlaufes auf einen Ventilzustand und/oder eine Ventilschieberposition des Stellventils zu schließen.

Bei dem Einsatz für eine sicherheitsgerichtete Automatisierungsanlage ist die Vorrichtung ausgestaltet als eine Sicherheitsschaltbaugruppe, welche wiederum ausgestaltet ist, ein erstes Bauteil umfassend eine erste Spule und einem ersten Anker und ein zweites Bauteil umfassend eine zweite Spule und einem zweiten Anker für eine Sicherheitsschaltung anzusteuern, wobei das Detektionsmittel ausgestaltet ist, zusätzlich zu dem durch die erste Spule fließenden Arbeitsstrom auch den durch die zweite Spule fließenden Arbeitsstrom zu überwachen.

Anhand der Zeichnung wird das erfindungsgemäße Verfahren und die Vorrichtung näher erläutert. Es zeigen:
- FIG 1: eine Vorrichtung zur Zustandsüberwachung,
- FIG 2: Auftreten einer Änderung in einem Stromverlauf,
- FIG 3: Erläuterungen des Prinzips anhand einer Relais-Ausgabebaugruppe,
- FIG 4: der Zusammenhang zwischen einer auftretenden Änderung im Stromverlauf und einem Ausgabesignal eines Detektionsmittels,
- FIG 5: eine mögliche Realisierung des Detektionsmittels,
- FIG 6: eine Sicherheitsbaugruppe in einem Sicherheitssystem und
- FIG 7: Erläuterung zum Auslösen des mechanischen Vorgangs.

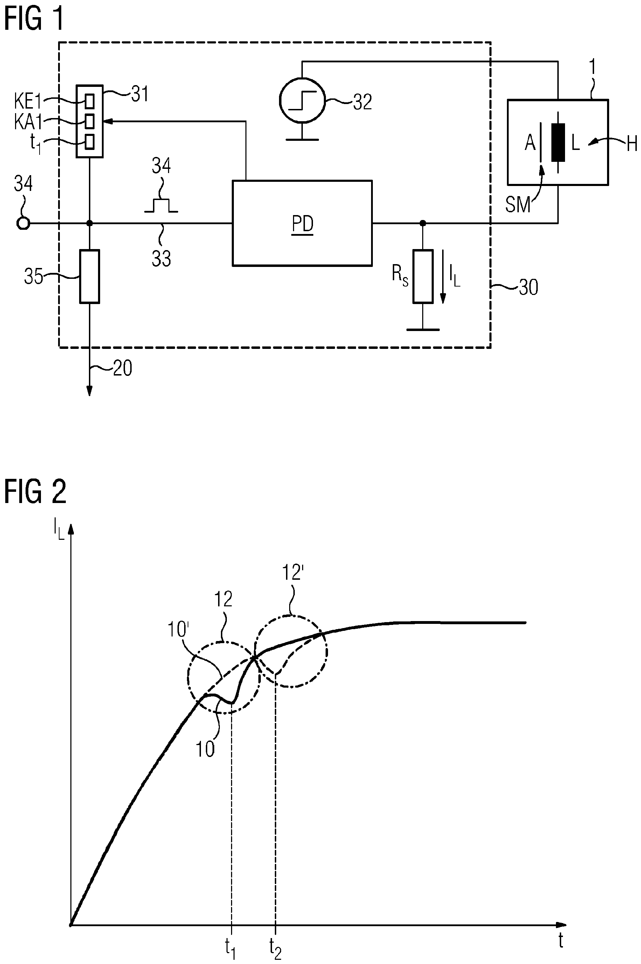

Gemäß FIG 1 ist eine Vorrichtung 30 zur Zustandsüberwachung eines elektromechanischen Bauteils 1 dargestellt. Das elektromechanische Bauteil 1 weist eine Spule L und einen Anker A auf, wobei der Anker A beispielsweise mit Kontakten derart zusammenwirkt, dass ein Stellmittel SM die Kontakte, beispielsweise von einer geöffneten Position in eine geschlossene Position verstellt.

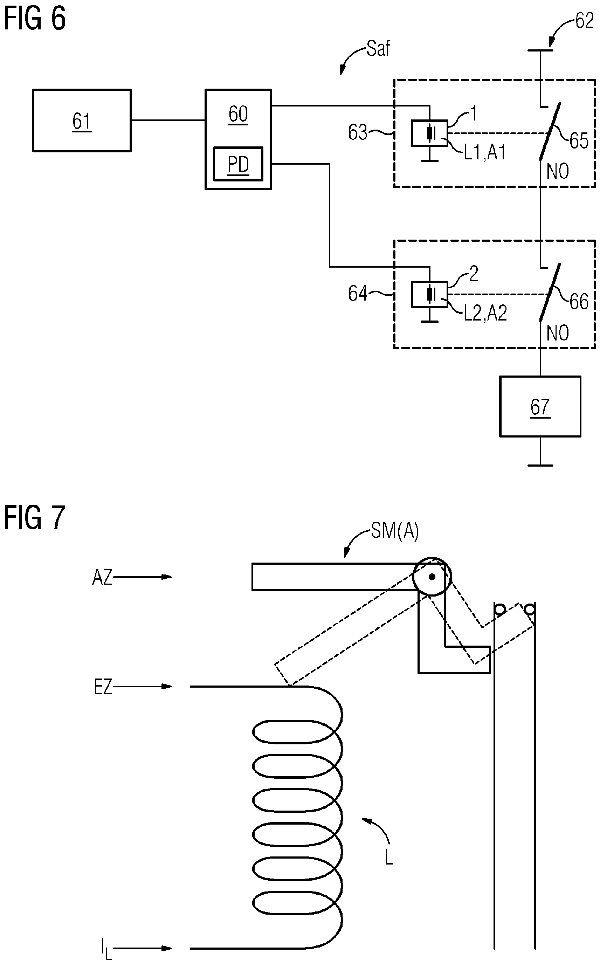

Demnach gilt folgendes, wenn an die Spule L ein Arbeitsstrom I_{L} angeschaltet oder abgeschaltet wird, wird mittels der Spule L und dem Anker A ein mechanischer Vorgang ausgelöst. Die Vorrichtung 30 weist ein Detektionsmittel PD auf, welches ausgestaltet ist, den durch die Spule L fließenden Arbeitsstrom I_{L} zu überwachen. Beispielsweise fließt der Arbeitsstrom I_{L} durch einen Messwiderstand RS und kann so durch das Detektionsmittel PD detektiert werden. Das Detektionsmittel PD ist weiterhin ausgestaltet, eine Änderung 12 (siehe FIG 2) im Stromverlauf 10 aufgrund einer Veränderung einer Induktivität H zu detektieren, wobei die Veränderung der Induktivität H durch den mechanischen Vorgang ausgehend von einem Anfangszustand AZ (siehe FIG 7) bis hin zu einem Endzustand EZ des Stellmittels SM bzw. ausgehend von dem Endzustand EZ zu dem Anfangszustand AZ des Stellmittels SM hervorgerufen wird. Das Detektionsmittel PD ist dabei dazu ausgestaltet, diese Änderung 12 auf eine Plausibilität zu prüfen und das Ergebnis als eine Fehlerdiagnose oder eine vorausschauende Wartungsempfehlung bereitzustellen. Das Detektionsmittel PD weist einen Detektorausgang 33 auf, an welchem ein Peak-Signal 34 erscheint, wenn das Detektionsmittel PD die Änderung 12 im Stromverlauf 10 detektiert hat.

Eine Vergleichseinheit 35 kann eine Wartungsmeldung 20 absetzen, wenn die Vergleichseinheit 35 ein zeitliches Auftreten der Änderung 12 im Stromverlauf 10 mit einem Referenzzeitpunkt t₁ und einem zukünftigen Zeitpunkt t₂ des Auftretens der Änderung 12 im Stromverlauf 10 verglichen hat.

In einem Speichermittel 31 ist eine Einschaltkennlinie KE1, eine Ausschaltkennlinie KA1 und ein aus einer Inbetriebnahmephase ermittelter Referenzzeitpunkt t₁ hinterlegt. Die Vergleichseinheit 35 kann auf diese Daten zugreifen. Die Einschaltkennlinie KE1 bzw. die Ausschaltkennlinie KA1 sind Kennlinien für das Ein- bzw. Ausschalten eines Bauteils in einen neuwertigen Zustand. Wird in der Vergleichseinheit 35 kontinuierlich der Vergleich zwischen dem Stromverlauf 10 und den Einschaltkennlinien KE1 bzw. Ausschaltkennlinien KA1 durchgeführt, so kann ein frühzeitiger Verschleiß des Bauteils 1 erkannt werden.

Mit der FIG 2 ist ein Verschieben des Auftretens der Änderung 12 im Stromverlauf 10 verdeutlicht. Der Stromverlauf 10 ist beispielsweise derjenige Stromverlauf, welcher für ein neuwertiges Bauteil ermittelt wurde. Nach tausenden von Betriebsstunden stellt sich beispielsweise ein weiterer Stromverlauf 10' ein. Bei dem Stromverlauf 10 ist das Auftreten der Änderung 12 bei einem Referenzzeitpunkt t₁ zu sehen. Bei dem weiteren Stromverlauf 10' ist das Auftreten der weiteren Änderung 12' zu einem zukünftigen Zeitpunkt t₂ zu sehen. Das charakteristische Verhalten in dem Stromverlauf 10 hat sich somit von einem Referenzzeitpunkt t₁ zu einem späteren zukünftigen Zeitpunkt t₂ verschoben. Diese Verschiebung kann für eine Diagnosemeldung ausgewertet werden. Der beispielsweise in einer Inbetriebnahme-Phase ermittelte Referenzzeitpunkt t₁ wird mit dem zukünftigen Zeitpunkt t₂ des Auftretendes der Änderung 12' verglichen und sollte eine Differenz zwischen dem Referenzzeitpunkt t₁ und dem zukünftigen Zeitpunkt t₂ ein vorgebbares Maß überschreiten, so wird eine Wartungsmeldung 20 abgesetzt.

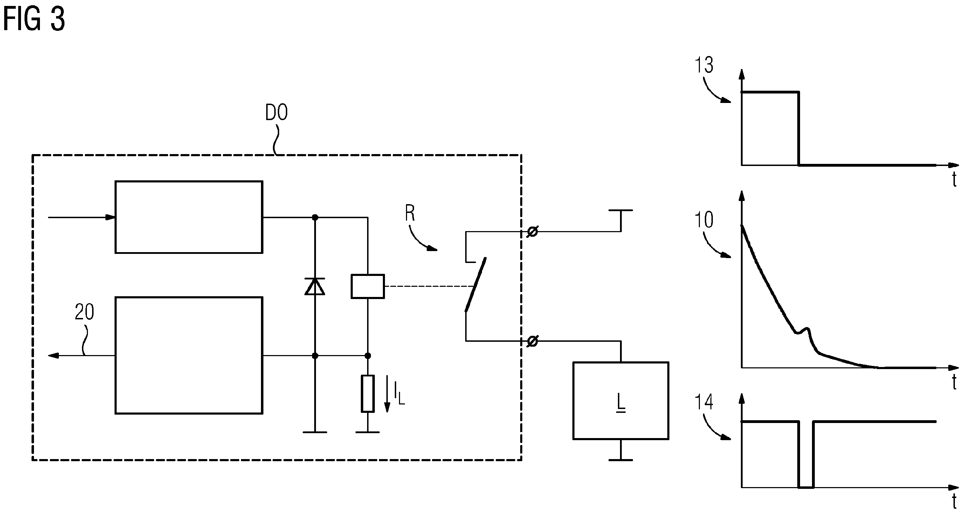

Mit der FIG 3 ist eine Relais-Ausgabebaugruppe DO dargestellt. Diese Relais-Ausgabebaugruppe DO weist das Detektionsmittel PD auf. Das Detektionsmittel PD ist ausgestaltet, die Relais R innerhalb der Relais-Ausgabebaugruppe DO zu überwachen. Ein Schaltkontakt des zu überwachenden Relais R schaltet eine Last L.

Zur Verdeutlichung der entstehenden Signalverläufe sind rechts neben der Relais-Ausgabebaugruppe DO der Stromverlauf 10, ein Spannungsverlauf 13 und der Signalverlauf am Detektorausgang 14 dargestellt. Beispielhaft ist ein Abschaltvorgang gezeigt. Im Spannungsverlauf 13 ist zu erkennen, dass die Spannung zum Schalten des Relais R abgeschaltet wird. Das Abschalten der Spannung erzeugt eine Gegeninduktivität, welches als Änderung im Stromverlauf 10 sichtbar wird. Diese Änderung 12 kann das Detektionsmittel PD detektieren und an seinem Ausgang als Signalverlauf 14 präsentieren.

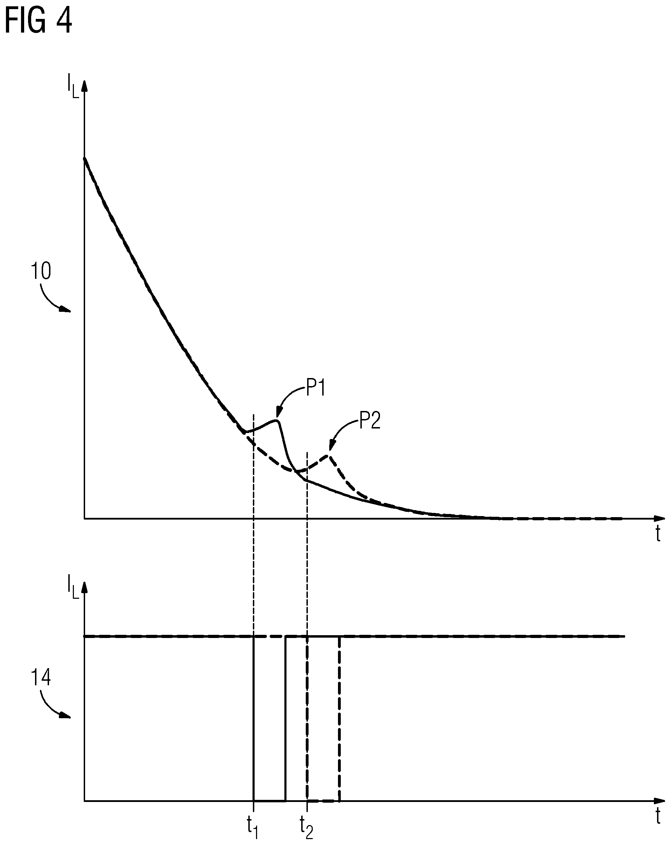

FIG 4 zeigt die zuvor beschriebene Änderungsdetektion in einer vergrößerten Darstellung. Für ein neuwertiges Bauteil 1 wird im Stromverlauf 10 für einen Referenzzeitpunkt t₁ ein erster Peak P1 detektiert. Ist das Bauteil 1 bereits mehrere tausend Betriebsstunden geschaltet worden, so verschiebt sich der zuvor detektierte erste Peak P1 in Richtung eines zukünftigen Zeitpunktes t2 und es entsteht ein zweiter verschobener Peak P2, welcher ebenfalls von dem Detektionsmittel PD detektiert wird, aber eben zu einem späteren Zeitpunkt t₂.

Der Signalverlauf am Detektorausgang 14 zeigt somit eine Detektion zu dem Referenzzeitpunkt t₁ und eine Detektion zu dem zukünftigen Zeitpunkt t₂.

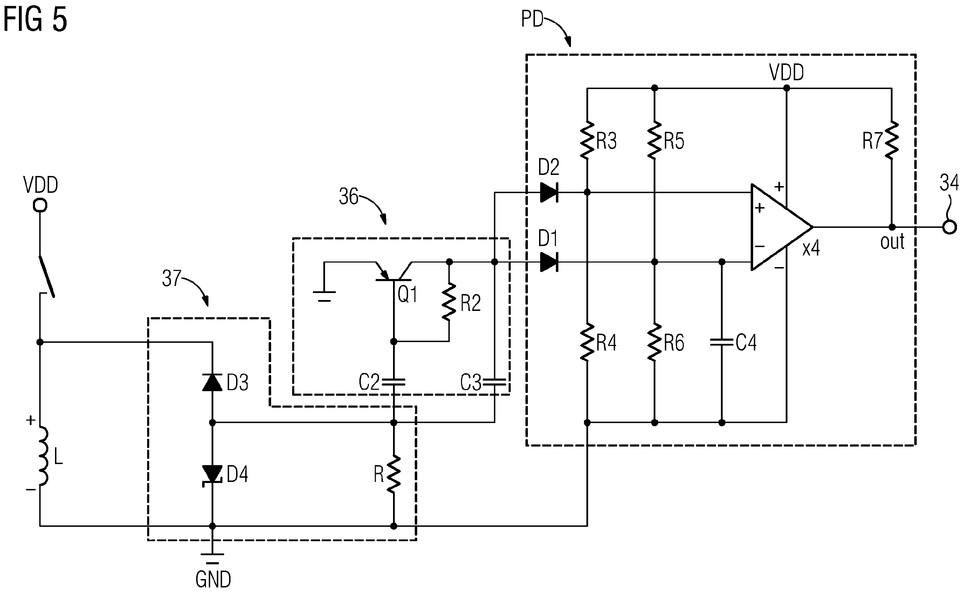

Gemäß FIG 5 ist das Detektionsmittel PD als eine mögliche Ausgestaltung mit Operationsverstärkern, Widerständen, Dioden und Kondensatoren als ein Schaltbild dargestellt. Vor dem Detektionsmittel PD ist ein Begrenzungsmittel 36 mit einen Transistor geschaltet. Dieses Begrenzungsmittel 36 soll ein Wind up vermeiden. Dem Begrenzungsmittel 36 wiederum ist eine Schutzschaltung 37 vorgeschaltet und diese Schutzschaltung 37 ist direkt an die zu überwachende Spule L angeschaltet.

Für den Einsatz der erfindungsgemäßem Vorrichtung 30 in einem Sicherheitssystem Saf ist gemäß FIG 6 ein Blockschaltbild dargestellt. Eine speicherprogrammierbare Steuerung 61 steht mit einer Sicherheitsbaugruppe 60 in Verbindung. Die Sicherheitsbaugruppe 60 schaltet ein erstes Relais 62 und ein zweites Relais 64. Das erste und das zweite Relais 63,64 betätigen jeweils einen ersten Schalter 65 bzw. einen zweiten Schalter 66. Der erste Schalter 65 und der zweite Schalter 66 sind zum Ansteuern einer Sicherheitseinrichtung 67 in einer Reihenschaltung angeordnet. Sind die Schalter 65,66 geschlossen, kann eine Versorgungsspannung 62 an die Sicherheitseinrichtung 67 geschaltet werden. Da es aber gewährleistet sein muss, dass die Sicherheitseinrichtung auf jeden Fall abschaltet, auch wenn ein Kontakt des ersten bzw. des zweiten Schalters 65,66 verklebt sein sollte, sind eben zwei Schalter hintereinandergeschaltet. Die Sicherheitseinrichtung 67 kann somit immer sicher abgeschaltet werden.

Sollte sich aber die Mechanik eines Schalters 65,66 verändern, so kann das im Signalverlauf des ersten Relais 63 bzw. des zweiten Relais 64 detektiert werden und frühzeitig zu einer Warnmeldung abgesetzt werden. Die Sicherheitsbaugruppe 60 weist dazu das Detektionsmittel PD auf.

Ergänzend ist gemäß FIG 7 anhand eines einfachen Relais R mit zwei zu schließenden Kontakten der mechanische Vorgang erklärt. Wird ein Arbeitsstrom I_{L} an die Spule L angeschaltet oder abgeschaltet, wird durch das an- bzw. abschalten des Arbeitsstroms I_{L} mittels der Spule L und dem Anker A ein mechanischer Vorgang ausgelöst. Der mechanische Vorgang ist ausgehend von einem Anfangszustand AZ das Anziehen des Ankers A bzw. Stellmittels zur Spule L bis sich der Anker A bzw. das Stellmittel zu einem Endzustand EZ befindet.

## Patentansprüche

1. Verfahren zur Zustandsüberwachung eines elektromechanischen Bauteils (1) umfassend eine Spule (L) und einen Anker (A), wobei ein Arbeitsstrom (I_{L}) an die Spule (L) angeschaltet oder abgeschaltet wird, wobei durch das an- bzw. abschalten des Arbeitsstroms (I_{L}) mittels der Spule (L) und dem Anker (A) ein mechanischer Vorgang ausgelöst wird, wobei mittels eines Detektionsmittels (PD) der durch die Spule (L) fließende Arbeitsstrom (IL) überwacht wird,
wobei der mechanische Vorgang ausgehend von einem Anfangszustand (AZ) bis hin zu einem Endzustand (EZ) eines Stellmittels (SM) bzw. ausgehend von dem Endzustand (EZ) zu dem Anfangszustand (AZ) des Stellmittels (SM) eine Induktivität (H) der Spule (L) verändert, wobei die Veränderung der Induktivität (H) eine Änderung (12) im Stromverlauf (10) des aktuell überwachten Arbeitsstroms (I_{L}) hervorruft, wobei mittels des Detektionsmittels (PD) diese Änderung (12) auf eine Plausibilität geprüft wird, und das Ergebnis für eine Fehlerdiagnose und oder eine vorausschauende Wartungsempfehlung des Bauteils (1) genutzt wird.

2. Verfahren nach Anspruch 1, wobei der aktuell überwachte Arbeitsstrom (I_{L}) derart analysiert wird, dass sein Stromverlauf (10) mit einer das Bauteil (1) charakterisierenden Einschaltkennlinie (KE1) bzw. Ausschaltkennline (KA1) verglichen wird, und wenn der Vergleich eine vorgebbare Abweichung (11) überschreitet, wird eine Wartungsmeldung (20) abgesetzt.

3. Verfahren nach Anspruch 1 oder 2, wobei ein zeitliches Auftreten der Änderung (12) im Stromverlauf (10) in einer Inbetriebnahme-Phase als Referenzzeitpunkt (ti) abgespeichert wird, und zukünftige Zeitpunkte des Auftretens der Änderung (12) im Stromverlauf (10) mit dem Referenzzeitpunkt (ti) verglichen werden, sollte die Differenz zwischen dem Referenzzeitpunkt und dem zukünftigen Zeitpunkt (Z₂) ein vorgebbares Maß überschreiten, so wird eine Wartungsmeldung (20) abgesetzt.

4. Verfahren nach einem der Ansprüche 1 bis 3, wobei das Detektionsmittel (PD) innerhalb einer Ausgabebaugruppe für elektromechanische Aktoren betrieben wird.

5. Verfahren nach einem der Ansprüche 1 bis 3, wobei das Detektionsmittel (PD) innerhalb einer Relais-Ausgabebaugruppe (DO) für die Relais innerhalb der Relais-Ausgabebaugruppe (DO) betrieben wird.

6. Verfahren nach einem der Ansprüche 1 bis 4, wobei als elektromechanisches Bauteil (1) ein Stellventil eingesetzt wird und anhand der Überwachung auf einen Ventilzustand und/oder auf eine Ventilschieberposition geschlossen wird.

7. Verfahren nach einem der Ansprüche 1 bis 4 oder 6, wobei das Detektionsmittel (PD) in einem Sicherheitssystem (Saf) verwendet wird, bei welchem ein erstes Bauteil (1) umfassend eine erste Spule (L1) und einen ersten Anker (A1) und ein zweites Bauteil (2) umfassend eine zweite Spule (L2) und zweiten Anker (A2) für eine Sicherheitsschaltung betrieben werden, und weiterhin in dem Detektionsmittel (PD) zusätzlich zu dem durch die erste Spule (L1) fließende Arbeitsstrom (I_{L}) auch der durch die zweite Spule (L2) fließende Arbeitsstrom (I_{L}) überwacht wird.

8. Vorrichtung (30) ausgestaltet zur Zustandsüberwachung eines elektromechanischen Bauteils (1) mit einer Spule (L) und einem Anker (A), wobei wenn an die Spule (L) ein Arbeitsstrom (IL) angeschaltet oder abgeschaltet wird, mittels der Spule (L) und dem Anker (A) ein mechanischer Vorgang ausgelöst wird, aufweisend ein Detektionsmittel (PD), welches ausgestaltet ist den durch die Spule (L) fließenden Arbeitsstrom (IL) zu überwachen, weiterhin ausgestaltet eine Änderung (12) im Stromverlauf (10) aufgrund einer Veränderung einer Induktivität (H) zu detektieren, wobei die Veränderung der Induktivität (H) durch den mechanischen Vorgang ausgehend von einem Anfangszustand (AZ) bis hin zu einem Endzustand (EZ) eines Stellmittels (SM) bzw. ausgehend von dem Endzustand (EZ) zu dem Anfangszustand (AZ) des Stellmittels (SM) hervorgerufen wird, das Detektionsmittel (PD) ist dazu ausgestaltet diese Änderung (12) auf eine Plausibilität zu prüfen, und das Ergebnis als eine Fehlerdiagnose und oder eine vorausschauende Wartungsempfehlung bereitzustellen.

9. Vorrichtung (30) nach Anspruch 8, wobei ein Speichermittel (31) vorhanden ist in dem eine das Bauteil (1) charakterisierende Einschaltkennlinie (KE1) bzw. Ausschaltkennline (KA1) hinterlegt ist, wobei das Detektionsmittel (PD) weiterhin dazu ausgestaltet ist, den aktuell überwachten Stromverlauf (10) des Arbeitsstroms (I_{L}) mit der charakterisierenden Einschaltkennlinie (KE1) bzw. Ausschaltkennline (KA1) zu vergleichen und wenn der Vergleich eine vorgebbare Abweichung (11) überschreitet eine Wartungsmeldung (20) abzusetzen.

10. Vorrichtung (30) nach Anspruch 8 oder 9, wobei das Detektionsmittel (PD) ausgestaltet ist ein zeitliches Auftreten der Änderung (12) im Stromverlauf (10) in einer Inbetriebnahme-Phase als Referenzzeitpunkt (ti) abzuspeichern und zukünftige Zeitpunkte (t₂) des Auftretens der Änderung (12) im Stromverlauf (10) mit dem Referenzzeitpunkt (ti) zu vergleichen, und eine Differenz zwischen dem Referenzzeitpunkt (t₁) und dem zukünftigen Zeitpunkt (t₂) zu ermitteln und mit einem vorgebbaren Maß zu vergleichen und bei einem Überschreiten eine Wartungsmeldung (20) abzusetzen.

11. Vorrichtung (30) nach einem der Ansprüche 8 bis 10, ausgestaltet als eine Ausgabebaugruppe für elektromechanische Aktoren.

12. Vorrichtung (30) nach einem der Ansprüche 8 bis 10, ausgestaltet als eine Relais-Ausgabebaugruppe (DO), wobei das Detektionsmittel (PD) die Relais (R) innerhalb der Relais-Ausgabebaugruppe (DO) überwacht.

13. Vorrichtung (30) nach einem der Ansprüche 8 bis 11, ausgestaltet als elektromechanisches Bauteil (1) ein Stellventil (SV) anzusteuern und weiterhin ausgestaltet anhand der Überwachung auf einen Ventilzustand und/oder auf eine Ventilschieberposition des Stellventils zu schließen.

14. Vorrichtung (30) nach einem der Ansprüche 8 bis 11 oder 13, ausgestaltet als eine Sicherheitsschaltbaugruppe, welche wiederum ausgestaltet ist ein erstes Bauteil (1) umfassend eine erste Spule (L1) und einen ersten Anker (A1) und ein zweites Bauteil (2) umfassend eine zweite Spule (L2) und zweiten Anker (A2) für eine Sicherheitsschaltung anzusteuern, wobei das Detektionsmittel (PD) ausgestaltet ist zusätzlich zu dem durch die erste Spule (L1) fließenden Arbeitsstrom (I_{L}) auch den durch die zweite Spule (L2) fließenden Arbeitsstrom (I_{L}) zu überwachen.
